Europäisches Patentamt

European Patent Office

Office européen des brevets

(19)

(11) Veröffentlichungsnummer: **0 363 728 B1**

# (12) EUROPÄISCHE PATENTSCHRIFT

(45) Veröffentlichungstag der Patentschrift :
**11.12.91 Patentblatt 91/50**

(51) Int. Cl.⁵ : **G01K 5/70**, G01K 5/62,
G01K 1/14

(21) Anmeldenummer : **89117815.4**

(22) Anmeldetag : **27.09.89**

(54) Indikatorsystem zur Anzeige von kritischen Temperaturbereichen.

(30) Priorität : **13.10.88 DE 3834903**
**06.09.89 DE 3844587**

(43) Veröffentlichungstag der Anmeldung :
**18.04.90 Patentblatt 90/16**

(45) Bekanntmachung des Hinweises auf die
Patenterteilung :
**11.12.91 Patentblatt 91/50**

(84) Benannte Vertragsstaaten :
**AT BE CH DE ES FR GB GR IT LI LU NL SE**

(56) Entgegenhaltungen :
**GB-A- 2 200 998**
**US-A- 2 939 320**
**US-A- 3 452 706**
**US-A- 4 064 827**
**US-A- 4 091 763**

(73) Patentinhaber : **WANFRIED-DRUCK KALDEN GMBH**
**Schlagdstrasse 20**
**W-3442 Wanfried 1 (DE)**

(72) Erfinder : **Burhenne, Wolfgang**
**Ringstrasse 55**
**W-3442 Wanfried 1 (DE)**
Erfinder : **Mann, Wolfgang, Dipl.-Ing. grad.**
**Müllergasse 210**
**W-5000 Köln 91 (DE)**

(74) Vertreter : **Jahn-Held, Wilhelm W., Dr.Dr.-Ing.**
**Dipl.Chem.**
**Schöne Aussicht 8**
**W-3513 Staufenberg 1 (DE)**

## Beschreibung

Für die Bevölkerung und die Wirtschaft ist die Überwachung der Qualität von chemischen und pharmazeutischen Produkten und von Nahrungsmitteln von erheblicher Bedeutung. Dies gilt besonders für temperaturempfindliche Produkte, die nur innerhalb eines unteren und oberen Grenzbereiches der Temperatur für die Lagerung, für den Transport und für die Handhabung von gleichbleibender Qualität sind.

Der Stand der Technik hat sich deshalb bereits mit dieser problemstellung befasst. Es sind Minima- Maxima- Thermometer mit Kapillarröhren bekannt, in denen Alkohol oder Quecksilber magnetisierbare Stäbe transportieren, die bei der erreichten Temperatur stehen bleiben und diese damit anzeigen. Die Stäbe können wieder in die Ausgangsposition zurückgeführt werden. Diese Thermometer haben den Nachteil, dass diese grossflächig sind, senkrecht angebracht werden müssen und bruchanfällig sind. Es sind auch Flüssigkeitsindikatoren bekannt. Diese nutzen den Gefrierpunkt des Wassers als technischen Effekt aus. Es wird durch eine Kapselsprengung bei etwa 0°C eine Indikatorflüssigkeit freigegeben. Diese Temperatur kann durch Gemische aus Äthanol und Wasser auf Grenztemperaturen unterhalb von 0°C ausgedehnt werden. Auch diese Indikatoren sind grossvolumig und bruchanfällig. Wesentlich ist, dass diese für Temperaturen oberhalb 0°C nicht anwendbar sind.

Es sind auch chemisch reagierende Indikatoren bekannt. Diese haben den Nachteil, dass diese stets unterhalb der zu überwachenden Temperaturen gestartet werden müssen. Eine Kontrolle von 2 Temperaturen innerhalb eines Temperaturbereiches ist mit diesen Indikatoren nicht möglich, weil bei diesen Systemen nur monstonsteigende Temperaturen überwacht werden können. Es ist auch bei längerer Lagerzeit eine Veränderung solcher Substanzen nicht genügend sicher auszuschliessen.

Die deutsche Auslegeschrift 2130926 macht einen optischen Kontrollindikator für Tiefkühlprodukte bekannt.Dieser arbeitet so, dass mehrere Schmelzsubstanzen mit unterschiedlichem Schmelzpunkt nach aussen thermisch isoliert den Schmelzpunkt mit Zeitverzögerung an einer Sichtanzeige anzeigen. Dieses Gerät soll die Erhöhung der Temperatur oberhalb der Kühltemperatur anzeigen. Es befinden sich Alkohol- Wasser-Mischungen in Kapseln, die bei Erhöhung der Temperatur in einem eingestellten Bereich zwischen 0°C und — 20°C die Grenztemperatur anzeigen. Dieses Gerät ist für Temperaturen oberhalb von 0°C nicht geeignet und daher in seiner Anwendung beschränkt. Ausserdem ist in vielen Fällen das Austreten von Flüssigkeit aus einer gesprengten Kapsel nachteilig.

Der Stand der Technik hat sich in jüngerer Zeit in eine andere Richtung entwickelt. Dieser ermittelt zeitabhängige oder Zeit- und Temperatur- abhängige Umweltbedingungen zur Bewertung der "Haltbarkeit", d.h. der Änderung der Qualität von Rohstoffen und Produkten.

Die deutsche Patentschrift 3717025 beschreibt eine Anzeigevorrichtung für zeitabhängige Vorgänge. Es wird durch eine Pressung eine Indikatormasse aus einem Depot über einen Kanal mit einem Indikatorstreifen verbunden. Nach diesem Starten wird der Zeitpunkt ermittelt an dem die Verfärbung des Streifens das Ende des Anzeigekanals erreicht hat.

Die deutsche Patentschrift 3210907 beschreibt einen Indikator für die Anzeige einer Zeit-Temperatur-Belastung für Fettstoffe. Es befindet sich in einem länglichen Depotkörper ein streifenförmiges Fliessmedium,dem ein Verdickungsmittel zugesetzt ist. Es wird durch das Einstecken des Indikators in den Depotkörper erreicht, dass die Fettstoffe über die Zeit fortschreirend in das Fliessmedium eindringen und mit der Zeit eine immer grössere Wegstrecke zurücklegen. Aus der Länge der Wegstrecke sollen die sich überlagernden Belastungsfaktoren erfaßt werden.

Die US — Patentschrift 4064827 beschreibt ein System der Temperaturanzeige, welches in der konstruktiven Ausbildung nur für die Verwendung in senkrechter Stellung geeignet ist, weil sonst der Indikatoranzeiger nicht frei abfallen kann. Das System besitzt Thermobimetallscheiben und einen Staststift.

Diese Vorrichtung hat auch den Nachteil der Unsicherheit und Ungenauigkeit der Anzeige der kritischen Temperatur. Die Bewegung der Wächterscheibe aus Bimetall im kalottenförmigen Zustand von $T_u$ nach $T_o$ wird größer, je mehr sich diese der kritischen Temperatur nähert. Die Scheibe löst sich bereits vor Erreichen des Umschlages der Wächterscheibe aus Bimetall, da keine ausreichende Pressung mehr gegen das Gehäuse besteht.

Die US — Patentschrift 4091763 beschreibt eine Vorrichtung ohne ein Startelement. Dies führt zu einer beschränkten Einsatzmöglichkeit. Im bereich der international gültigen Raumtemperatur zwischen +15°C und +25°C ist eine temperaturunabhängige Lagerung praktisch ausgeschlossen ohne daß der indikator selbstständig startet. Dies gilt ebenso für andere Temperaturbereiche, da eine unsachgemäße Handhabung während des Transportes und der Lagerung in bezug auf die einwirkende Temperatur nicht ausgeschlossen werden kann bevor diese Vorrichtung ohne Starteinrichtung zur Anwendung kommt.

Dieses System verwendet ein durchsichtiges Fluid, das erst nach Verdrängung die Farbanzeige durch ein Fenster freigeben soll. Es besteht der Nachteil einer ungenauen Anzeige. Dazu kommt die Gefahr der

EP 0 363 728 B1

Unbrauchbarkeit bei der Handhabung und Verwendung durch Bruch und Austreten der Flüssigkeit.

Das System nach US-A-3452706 weist eine Thermobimetallscheibe und einen Schmappmechanismus mit Auslösebolgen und Auzeigekolben auf, ist aber nichstellbar.

Aufgabe der Erfindung ist es, ein Indikator-system zur Ermittlung von Grenztemparaturen zu entwichelm, welches die Nachteile der Indikatoren nach dem Stand der Technik vermeidet und den Bereich der Grenztemperaturen auf einen Temperaturbereich von unterhalb und oberhalb von 0°C erweitert.

Das Indikatorsystem gemäss der Erfindung und das Verfahren zu seiner Werstellung hat sich die Aufgabe gestellt, ein kompaktes, bruchsicheres, unbegrenzt lagerfähiges Indikatorsystem mit minimierten Dimensionen darzustellen, das sowohl für die Anzeige von Einzeltemperaturen, wie für Temperaturbereiche sicher geeignet ist, und das die Unter- bzw. überschreitung der kritischen Temperaturen irreversibel sichtbar anzeigt.

Das Indikatorsystem gemäss der Erfindung ist im dem Patentansprüchen 1, 2 und 3 definiert.

Das Indikatorsystem der Erfindung ist in seiner weiteren Ausgestaltung in den abhängigen Ansprüchen 4 bis 15 dargelegt. Ein Verfahren zu seiner Herstellung sowie die Anwendung sind in den Ansprüchen 16 und 20 definiert.

Das Indikatorsystem der Erfindung mit irreversibler Grenzwertanzeige einer vorbestimmten oder mehrerer vorbestimmter Grenzwerttemperatur(en) ist in der Figuren erläutert.

Es wird dargestellt in

Figur

| | |
|---|---|
| 1 | Seitenansicht des Monosystems mit Indikatormasse mittels herausziehbarer Startlasche und mit Wächterscheibe aus Thermobimetall. |
| 2 | Seitenansicht des Monosystems wie in Figur 1 mit Indikatormasse und Starteinrichtung und mit herausgezogener Startlasche. |
| 3 | Seitenansicht des Monosystems wie in Figur 2 mit Indikatormasse ohne Startlasche nach Über- bzw. Unterschreiten des Grenztemperaturwertes. |
| 4 | Seitenansicht des Doppelsystems mit Indikatormasse und Starteinrichtung mittels herausziehbarer Startlasche und mit zwei Wächterscheiben aus Thermobimetall, |
| 5 | Seitenansicht des Doppelsystems wie in Figur 4 mit Indikatormasse und Starteinrichtung mit herausgezogener Startlasche |
| 6 | Seitenansicht des Doppelsystems wie in Figur 5 ohne Startlasche nach Über- bzw. Unterschreiten des Grenztemperaturwertes. |
| 7 | Seitenansicht des Doppelsystems ohne Indikatormasse in mechanischer Ausführung mit Starteinrichtung und Anzeigebolzen mit herausziehbarer Startlasche und mit zwei Wächterscheiben aus Thermobimetall. |
| 8 | Seitenansicht des Doppelsystems ohne Indikatormasse in mechanischer Ausführung wie in Figur 7 mit Anzeigebolzen und mit herausgezogener Startlasche. |
| 9 | Seitenansicht des Doppelsystems ohne Indikatormasse in mechanischer Ausführung wie in Figur 8 ohne Startlasche mit Anzeigebolzen nach Über- bzw. Unterschreiten des Grenztemperaturwertes. |
| 10 | Seitenansicht des Doppelsystems mit Indikatormasse ohne erfindungsgemäße Starteinrichtung und mit zwei Wächterscheiben aus Thermobimetall. |
| 11 | Seitenansicht des Doppelsystems mit Indikatormasse wie in Figur 10 ohne erfindungsgemäße Starteinrichtung nach Über- bzw. Unterschreiten des Grenztemperaturwertes. |

Figur

| | |
|---|---|
| 12 | Draufsicht des Monosystems wie in den Figuren 1 und 2 mit Anzeigefeld. |
| 13 | Draufsicht des Doppelsystems wie in den Figuren 4 und 5 mit Anzeigefeldern. |
| 14 | Draufsicht des Doppelsystems wie in den Figuren 7 und 8 mit Anzeigefeld. |
| 15 | Schrägsicht des Monosystems mit Anzeigefeld und Öffnung für die Startlasche. |
| 16 | Schrägsicht des Doppelsystems mit Anzeigefeld und Öffnnung für die Startlasche. |
| 17 | Draufsicht des Doppelsystems mit Darstellung der Klappeinlage des mechanischen Systems im geschlossenen Zustand. |
| 18 | Draufsicht des Doppelsystems mit Darstellung der Klappeinlage des mechanischen Systems im geöffneten Zustand. |
| Figur 19 | stellt den inaktiviertten Zustand im Mittchschnitt durch das Indikatorsystembar. |
| Figur 20 | stellt den aktivierten Zustand im Mittelschnitt, wie Figur 1, dar. |
| Figur 21 | stellt die Draufsicht auf das Indikatorsystem dar. |

Die Ziffern in den Figuren und in der Beschreibung betreffen folgende Teile des Indikatorsystems der Erfindung :

| Ziffer | Teil |
|---|---|
| 1 | Gehäuse |
| 2 | Ausnehmung |
| 3 | Wächterscheibe aus Thermobimetall |
| 4 | Indikatormasse |
| 5 | Abschlussetikett |
| 6 | Endanzeigefeld |
| 7 | Befestigung |
| 8 | Anzeigebolzen |
| 9 | Führungsplatte |
| 10 | Klappeinlage mit Klappdeckel |
| 11 | Startlasche |
| 12 | Abschlussdeckel |
| 13 | Freiraum, Ansuchmmung im Abschluß |
| 14 | Niederhaltebolzen |
| 15 | Sicherungsscheibe |
| 16 | saugfähige Scheibe |
| 17 | gefäble Folie |
| 18 | aufgerauchte Folie. |

In der folgenden Aufstellung wird die Funktion der Systeme nach den Figuren beschrieben.

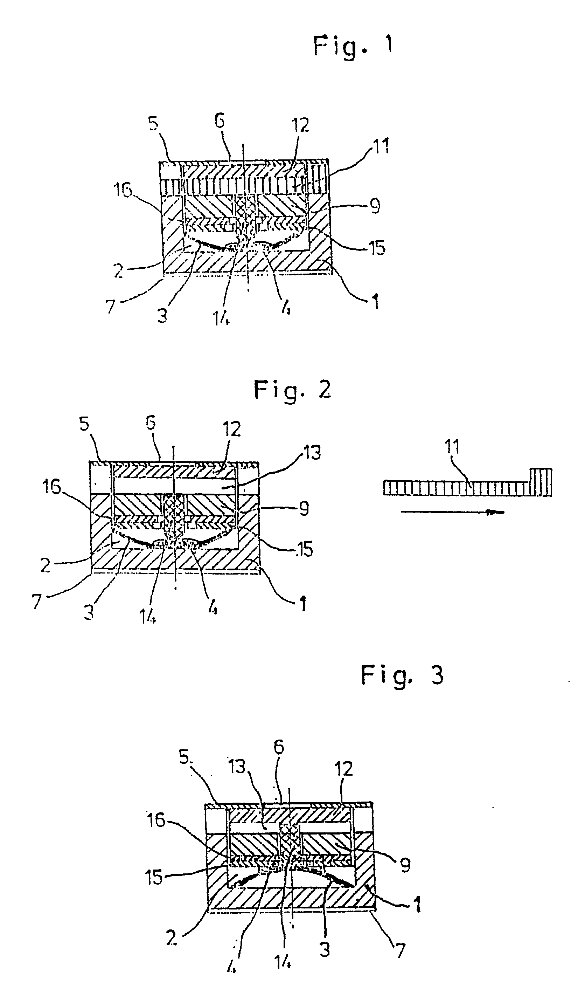

Figur 1 : Inaktivierter Zustand, Anzeigefeld weiss (neutral), Lager- und Versandzustand nach der Fertigung.

Figur 2 : Aktivierter Zustand nach dem Aufbringen des Systems auf den Behältnissen des Produktes und Ziehen der Startlasche. Produkt im Kontrollzustand.

Figur 3 : Aktivierter Zustand des Systems nach Überschreiten des definierten Grenzwertes der Temperatur.

Das mittige Anzeigefeld ist durch Kontakt mit der Indikatormasse eingefärbt. Das System hat beispielsweise folgende Dimensionen als kompakte Baugrösse :

```
Länge  maximal     20 mm
Breite maximal     20 mm
Höhe   maximal      6 mm.
```

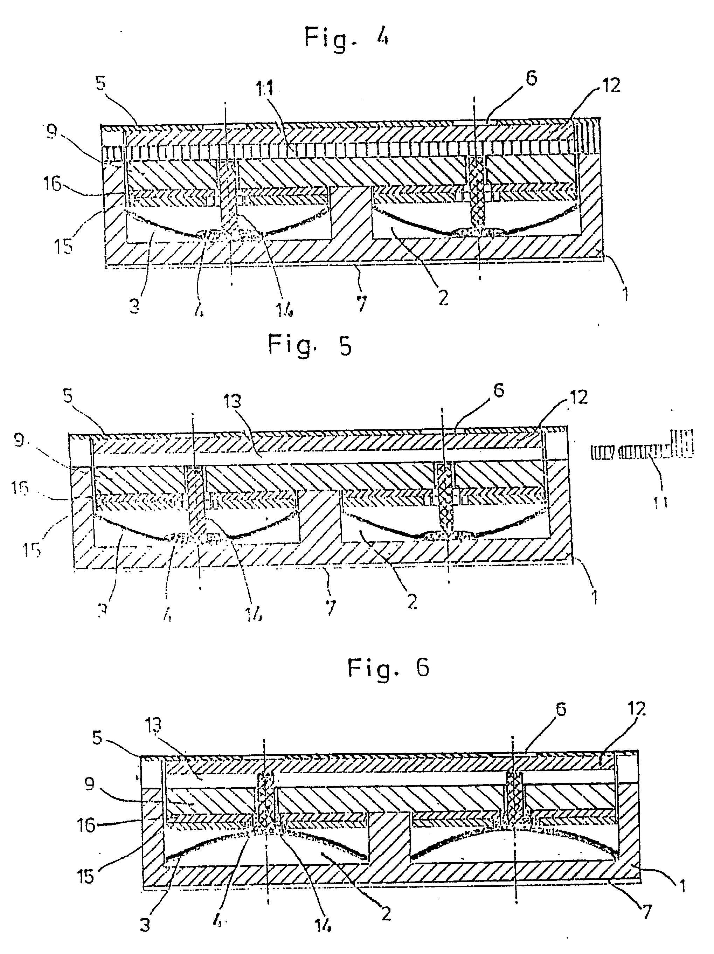

Figur 4 : Inaktivierter Zustand, Anzeigefeld weiss (neutral), Lager- und Versand- zustand nach der Fertigung des kompakten Systems.

Figur 5 : Aktivierter Zustand nach dem Aufbringen des Systems auf den Behältnissen des Produktes und Ziehen der Startlasche, Produkt im Kontrollzustand.

Figur 6 : Aktivierter Zustand der in sich getrennt reagierenden Systeme nach Über- bzw. Unterschreiten der definierten Grenzwerte der Temperatur.

Die getrennt liegenden Anzeigefelder sind duch Kontakt mit der Indikatormasse eingefärbt.

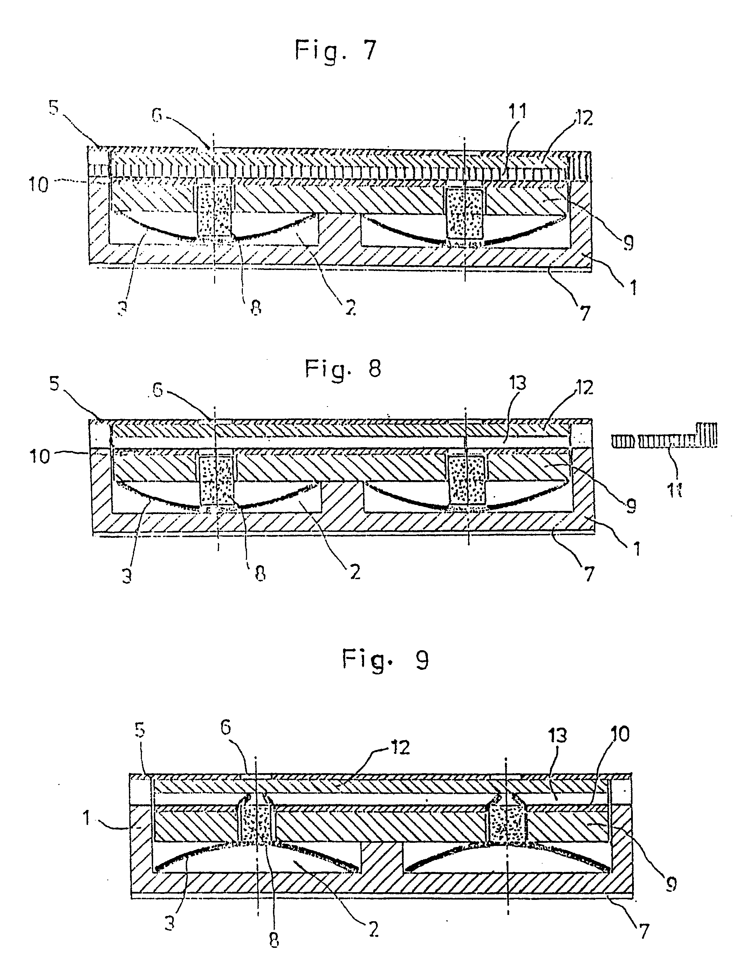

Figur 7 : Inaktivierter Zustand, irreversibles Anzeigefeld weiss (neutral) im geschlossenen Zustand und durch darüberliegende Startlasche niedergehalten. Lager- und Versandzustand nach der Fertigung.

Figur 8 : Aktivierter Zustand nach dem Aufbringen des Systems auf den Behältnissen des Produktes und Ziehen der Startlasche, Produkt im Kontrollzustand.

Figur 9 : Aktivierter Zustand der in sich getrennt reagierenden Systeme nach Überbzw. Unterschreiten der definierten Grenzwerte der Temperatur. Die weissen (neutralen) Anzeigefelder sind schlitzförmig nach oben geöffnet. Das Doppelsystem hat beispielsweise folgende Dimensionen als kompakte Baugrössen :

```
Länge   maximal     40 mm
Breite  maximal     20 mm
Höhe    maximal      6 mm.
```

Figur 10 : Inaktivierter Zustand, irreversibles Anzeigefeld weiss (neutral). Lager- und Versandzustand nach

4

der Fertigung.

Figur 11 : Aktivierter Zustand der in sich getrennt reagierender Systeme nach Über-bzw. Unterschreiten der definierten, vorgegebenen Grenzwerte der Temperatur. Die getrennt liegenden Anzeigefelder sind durch Kontakt mit der Indikatormasse irreversibel eingefärbt. Das System hat beispielsweise folgende Dimensionen als kompakte Baugrössen :

| | | | |
|---|---|---|---|
| Länge | maximal | 40 | mm |
| Breite | maximal | 2o | mm |
| Höhe | maximal | 3 | mm. |

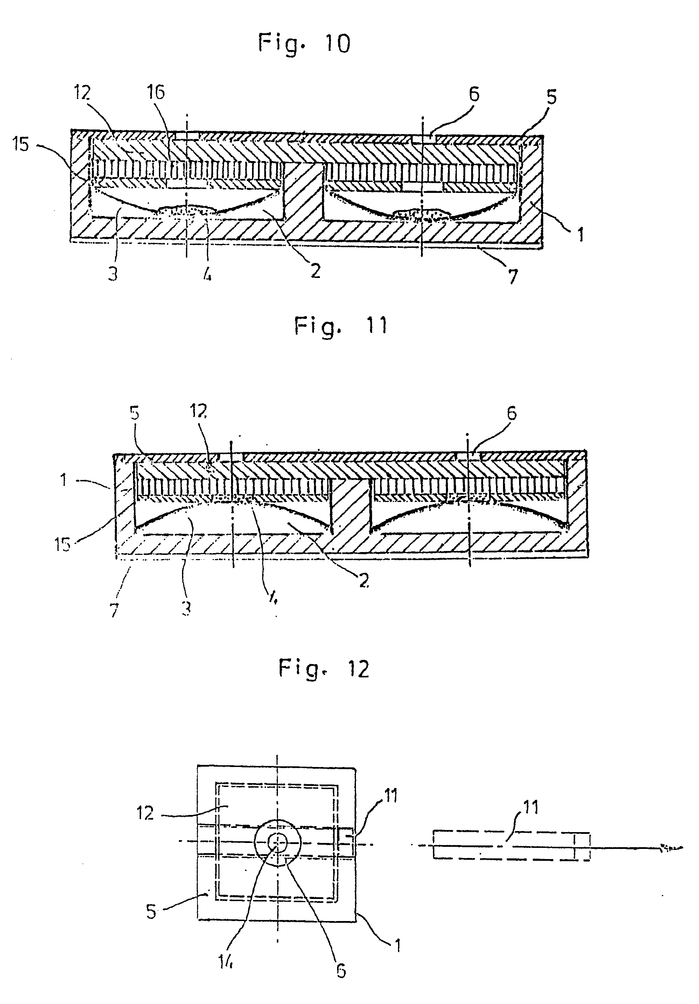

Die in den Figuren 10 und 11 dargestellten Ausbildungen des Indikatorsystems müssen innerhalb der vorgegebenen, eingestellten Grenz- temperaturen bei der Lagerung und beim Versand gehalten werden, da diese ohne eine erfindungsgemäße Starteinrichtung ausgelegt ist.

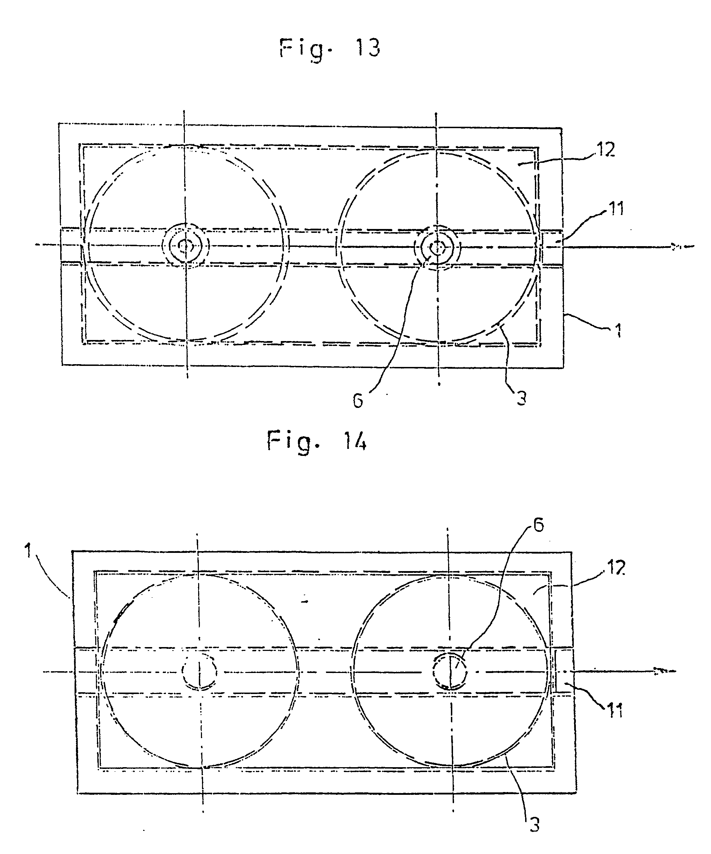

Figur 12 bis 16 : Draufsicht und Schrägansicht des Indikatorsystems mit den irreversiblen Anzeigefeldern.

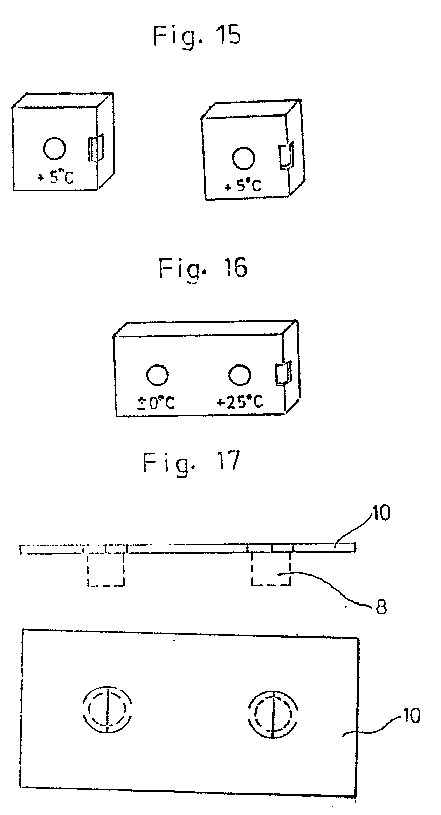

Figur 17 : Inaktivierter Zustand. Die geschlossen vorgestanzten Klappen der Klappeinlage haben die Funktion der Anzeigefelder mit äusseren Drehpunkten. Diese sind als Anzeigefelder weiss (neutral) im Versandzustand nach der Fertigung. Dieser Zustand ist zugleich Kontrollzustand.

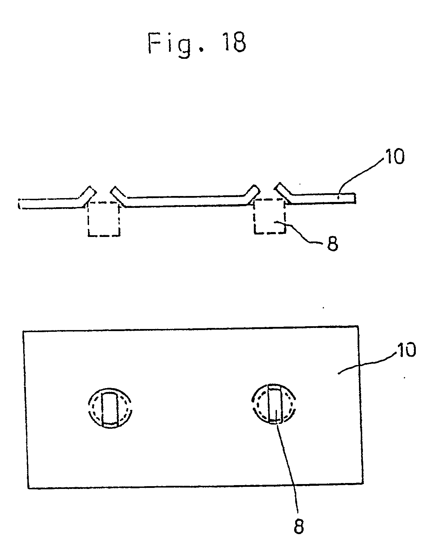

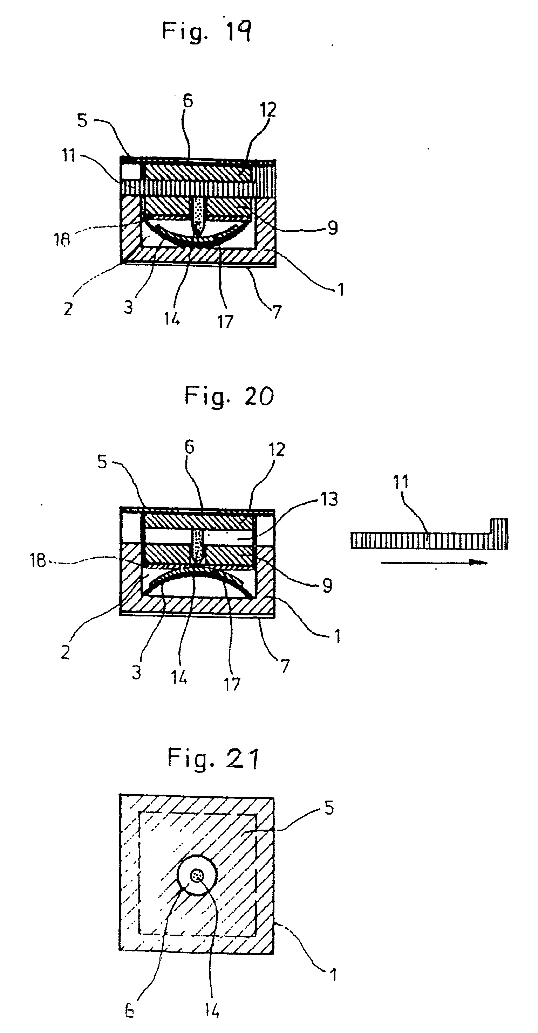

Figur 18 : Aktivierter Zustand der in sich getrennt reagierenden Systeme nach Über- bzw. Unterschreiten der der definierten Grenzwerte der Temperatur.

Die getrennt liegende Anzeigefelder sind schlitzförmig nach oben geöffnet.

Die gefärbten Anzeigebolzen zeigen durch die Öffnungen die irreversible Anzeige.

Nachfolgend wird für einzelnen Teile des Indikatorsystems der Erfindung deren Funktion besonders erläutert. Anzeigebolzen 8 : Diese dienen bei unterschiedlicher Einfärbung der sichtbaren, irreversiblen Anzeige des Über- bzw. Unterschreitens der vorgebenen Grenztemperatur. Die Farbtönung wird durch die nach oben gedrückten und bis dahin geschlossenen Klappen der Klappeinlage 10 sichtbar.

Diese Anordnung der Teile des Indikator-systems der Erfindung entspricht der alternativen mechanischen Ausführung.

Klappeinlage 10 : Diese besteht aus einer beispielsweise bis maximal 0,3 mm dicken, steifen Papiermasse, die weiss (neutral) ausgelegt ist. Die vorgestanzten Anzeigeklappen der Klappeinlage 10 sind in den äusseren Dreh punkten nicht durchgestanzt, sondern mit der Klappeinlage 10 fest verbunden.

Der im aktivierten Zustand nach oben gedrückte eingefärbte Anzeigebolzen 8 drückt die vorgestanzten, geschlossenen Klappen nach oben weg und öffnet diese schlitzförmig.

Starteinrichtung : Diese besteht aus dem funktionellen Zusammenwirken folgender Teile : System mit Indikatormasse : Startlasche 11, freiraum 13 (Ausnehmung im Abschlussdeckel 12), Niederhaltebolzen 14, Das System ist zunächst blockiert. Erst durch Herausziehen der Startlasche 11 wird das System aktiviert und zwar zu dem Zeitpunkt, in dem der Indikator als Anzeige kritischer Temperaturbereiche am Produkt in den Kontrollzustand versetzt wird.

System ohne Indikatormasse :

Startlasche 11 Freiraum 13 (Ausnehmung im Abschlussdeckel 12), eingefärbter Anzeigebolzen 8, Klappeinlage 10. Das System ist zunächst blockiert, da die Wächterscheibe mit Thermobimetall 3 keinen Bewegungsspielraum hat. Erst durch Herausziehen der Startlasche 11 wird das System ebenso wie das System mit Indikatormasse aktiviert.

Der Begriff "Starteinrichtung" fasst also Einzelteile wegen ihres Funktionsablaufes zusammen.

Die Starteinrichtung mit ihren Teilen gestattet also den Zeitpunkt des Einstellens des aktiven Zustandes, im dem die Produkte auf die Einhaltung der Grenztemperaturen zu kontrollieren sind, zu bestimmen.

Es ist also ein vorzeitiges Umschnappen des Thermobimetalles der Wächterscheibe 3 nicht möglich. Die Starteinrichtung gibt also dem System der Erfindung die erforderliche Sicherheit bei deren Handhabung nach der Fertigung. Indikatorgehäuse 1 : Dieses ist vorzugsweise selbstklebend ausgerüstet mit Haftkleber und abziehbarem Silikonschutzpapier. Nach dem Aufbringen des Systems der Erfindung auf den Verpackungen des Produktes wird das Silikonschutzpapier abgezogen und das Gehäuse 1 gegen das Produkt gepresst.

Es ist alternativ die Befestigung mittels Widerhaken möglich, die fester Bestandteil des Gehäuses 1 sind.

Die Widerstandshaken werden durch das Umhüllungsmaterial der Verpackung gedrückt und diese verhindern das Ablösen von der Verpackung.

Anzeigebolzen 8 : Dieser ist ein funktionelles Teil im mechanisch arbeitenden System. Dieser ist beispielsweise aus bruch- und druckfestem Kunststoff in zylindrischer Form mit einem Durchmesser von 4 mm und einer Länge von 3 mm gefertigt mit einer ebenem Fläche suckrecht zu seiner Mittelachse.

5

Der Anzeigebolzen ist beispielsweise blau, rot, gelb eingefärbt.

Dieser dient der irreversiblen Anzeige des Überschreitens der eingestellten, kritischen Temperatur durch Hochdrücken der Klappen der Klappeinlage 10.

Dieser hat im mechanisch arbeitenden System zugleich die Funktion als Niederhaltebolzen 14 und somit eine doppelte Funktion.

Niederhaltebolzen 14 : Dieser hat im System mit Indikatormasse nur die eine Funktion des Niederhaltens der Wächterscheibe mit Thermobimetall 3, um deren Umschnappen in die nach oben gebogene Stellung vor dem Ziehen der Startlasche 11 sicher zu verhindern.

Dieser hat beispielsweise einen Durchmesser von 2 mm der zylindrischen Form und eine Länge von 3 mm mit abgerundeten Ecken oder mit einer einseitigen Anspitzung und besteht aus farblosem bruch- und drucksicherem Kunststoff.

Die Anwendungsbreite des Indikatorsystems der Erfindung beruht auf der Möglichkeit der Kombination des Monosystems in einer oder mehrerer Stufen, z.B. von 1°, 5°, 8°, 15°, 30°C als Monosystem, oder in der Kombination mit zwei Grenztemperaturen, z.B. +1°C bis 15°C, oder+/–0°C his 25°C, oder von –10°C bis +10°C, oder des Doppelsystems für Temperaturbereiche z.B. von –20°C bis +30°C, wobei die Grenze der einzustellenden Grenztemperatur nach höheren Graden im praktischen Bereich offen ist.

Die Anzeige der Temperatur erfolgt im trockenen Zustand ohne äussere Veränderung des kompakten und minimierten Indikatorsystems durch Übergang der neutralen weissen Farbtönung (Farblosigkeit) in eine beliebige bunte Farbtönung der Indikatormasse oder des Anzeigebolzens z.B. von weiss nach rot oder blau, die durch die Sichtöffnungen der verschiedenen Schichten und durch das obere Etikett sichtbar ist.

Eingestellte Thermobimetalle als eingesetzte Wächterscheiben stehen in der Technik zur Verfügung.

Unter Niederhaltebolzen wird der eingesetzte, zylindrische Bolzen aus Metall oder Kunststoff verstanden, der im inaktivierten Zustand die Wächterscheibe mit der Wölbung nach unten feststellt. Unter inaktiver Zustand wird der Zustand verstanden, der bei der Anfertigung und der Lagerung des Indikatorsystem vorliegt ohne eine Funktions einstellung. Unter aktivierter Zustand wird der Zustand verstanden, der nach dem Einsetzen des Indikatorsystems auf Umhüllungen oder Verpackungen vorliegt, gegebenfalls durch Herausziehen der Startlasche. In diesem aktiven Zustand reagiert das Indikator-system der Erfindung auf die eingestellten unteren und/ oder oberen Grenztemperaturen. Der technische Effekt des Indikatorsystems der Erfindung beruht auf dem Umschnappen der Wächterscheibe aus Thermobimetall von der unteren in die obere Wölbung bei Erreichung des kritischen Grenzbereiches der Temperatur im aktivierten Zustand, und die Anzeige erfolgt in Kombination mit der Wirkung der Indikatormasse oder des eingefärbten Anzeigebolzens. Dieser technische Effekt ist irreversibel, und dieser ist nicht von aussen zu beeinflussen oder abzuändern.

Neben diesem physikalischen Effekt sind auch konstruktive technische Effekte für das Indikatorsystem der Erfindung wesentlich. Dieser besteht darin, dass die Höhe des unteren Raumes durch die Biegung des Thermobimetalles festzulegen ist. Dieser besteht auch darin, dass wegen der Minimierung der Höhe des kompakten Indikatorsystems der Erfindung die Höhen der darüber angeordneten Schichten der Funktion jeder einzelnen Schicht angepasst wird. Eine besondere Bedeutung hat auch der technische Effekt der Einstellung der Höhe der Führungsplatte. Diese ist so hoch definiert, dass im inaktivierten Zustand der Niederhaltebolzen mit der Oberseite der Führungsplatte abschliesst und im aktivierten Zustand der vorhandenen oder durch Herausziehen der Startlasche gebildeten Freiraumes in der Höhe exakt ausfüllt.

Die Höhe der Anhebung des Niederhaltebolzens und/oder des Anzeigebolzens ergibt sich aus der Höhe der Wächterscheibe, die durch die Sicherungsscheibe fixiert ist. Nur wenn diese konstruktiven Parameter vorliegen, wird im kritischen Zustand die Farbtönung der saugfähigen Scheibe, oder der Oberseite des eingefärbten Anzeigebolzens durch die Sichtöffnungen sicher sichtbar.

Das Indikatorsystem der Erfindung bietet die Möglichkeit, innerhalb eines geforderten Temperaturbereiches die Anzeige der kritischen Grenztemperatur bei abfallender und bei steigender Temperatur irreversibel anzuzeigen. Es kann beispielsweise die Grenztemperatur für eine Fettlösung zwischen 0°C und 25°C liegen. Für dieses Beispiel wird die Anzeige der Grenztemperatur auf +1°C und auf +24°C eingestellt.

Die Einwirkung der äusseren Temperatur auf das Thermobimetall der Wächterscheibe kann also innerhalb des zulässigen Temperaturbereiches liegen, oder die untere oder obere, eingestellte Grenztemperatur überschreiten und dann zur Anzeige durch die Farbtönung führen. Es ist zweckmässig, für Minusgrade die blaue und für Wärmegrade die rote Farbtönung zu verwenden. Das Indikatorsystem der Erfindung arbeitet also mit dem technischen Effekt einer " Temperaturwaage" innerhalb der zulässigen Schwankungsbreite der Lagerund Handhabungstemperatur.

Für das quadratische Monosystem mit Startlasche werden beispielsweise folgende Masse verwendet :

| Seitenlänge | 20 mm, |
| Höhe (Dicke) | 6 mm, |
| Durchmesser des Anzeigefeldes | 4 mm, |

wobei dieses ringförmig um den Niederhaltebolzen farbig ausgefüllt ist.

Das Monosystem ohne Startlasche verwendet beispielsweise folgende Masse

| Seitenlänge | 20 mm, |
| Höhe (Dicke) | 3 mm, |
| Durchmesser des Anzeigefeldes | 4 mm, |

wobei dieses voll mit Farbtönung ausgefüllt ist.

Für das rechteckige Doppelsystem mit Startlasche werden beispielsweise folgende Masse verwendet :

| Längsseiten | 40 mm, |
| Querseiten | 20 mm, |
| Höhe (Dicke) | 6 mm, |
| Durchmesser des Anzeigefeldes | 4 mm, |

wobei dieses ringförmig mit Farbtönung ausgefüllt ist.

Für das Doppelsystem ohne Startlasche werden beispielsweise folgende Masse verwendet :

| Längsseiten | 40 mm, |
| Querseiten | 20 mm, |
| Höhe (Dicke) | 3 mm, |
| Durchmesser des Anzeigefeldes | 4 mm, |

wobei dieses voll farbig ausgefüllt ist.

Für das quadratische Monosystem mit Startlasche und im mechanischen System werden beispielsweise folgende Masse verwendet :

| Seitenlänge | 20 mm, |
| Höhe (Dicke) | 6 mm, |
| Durchmesser des Anzeigefeldes | 4 mm, |

wobei dieses strichförmig ausgefüllt wirkt durch die geöffneten Klappen des Klappdeckels.

Für das rechteckige Doppelsystem mit Startlasche und im mechanischem System werden beispielsweise folgende Masse verwendet :

7

| | |
|---|---|
| Längsseiten | 40 mm, |
| Querseiten | 20 mm, |
| Höhe (Dicke) | 6 mm, |
| Durchmesser des | |
| Anzeigefeldes | 4 mm, |

wobei dieses ebenfalls strichförmig farbig angezeigt ist.

Die beispielsweisen Masse demonstrieren das kompakte Indikatorsystem der Erfindung.

Die Herstellung der chemischen Indikatormasse erfolgt beispielsweise durch Aufschmelzen des Paraffins, Einmischen der Triglyceride, Lösen des Farbstoffes und Einrühren der synthetischen Kieselsäure in die flüssige Phase und Abkühlen der Masse. eine kompakte, minimierte, bruchsichere, sicher lagerfähige Einheit, das durch die Kombination der Einzelschichten im Funktionssystem gegen eine Verschiebung seiner Teile bei der Handhabung ausreichend gesichert ist.

Das Indikatorsystem der Erfindung bietet den Vorteil, dass dieses im Monosystem für bestimmte, unterschiedliche Temperaturen auf Vorrat gehalten werden kann für einen raschen Einsatz im Bedarfsfall Das Indikatorsystem der Erfindung bietet den Vorteil, dass dieses für bestimmte Produkte im Doppelsystem auf spezifische Temperaturbereiche eingestellt und für dieses Produkt vorfabriziert werden kann für einen raschen Einsatz.

Das Indikatorsystem der Erfindung kann also temperaturspezifisch wie produkt-spezifisch hergestellt werden. Das Indikatorsystem bietet auch den technischen Vorteil, dass dieses keine Teile enthält, die erst durch Zerbrechen in Funktion treten. Es liegt darin eine zusätzliche Sicherheit bei der Handhabung. Das Indikatorsystem der Erfindung sichert die Qualitätskontrolle von Stoffen und Erzeugnissen in Verpackungseinheiten gegen das Überschreiten von kritischen Temperaturbereichen durch deren irreversible Anzeige.

In der folgenden Aufstellung wird die Funktion des Indikatorsystems im inaktivierten und aktivierten Zustand erläutert.

Die Führungsplatte 9 ist durchsichtig und darunter befindet sich die damit verbundene, aufgeraute Folie 18. Im inaktivierten Zustand verhindert der Niederhaltebolzen 14 dass sich die Wächterscheibe 3 mit der sich darauf befindlichen, gefärbten Folie 17 gegen die Unterseite der Führungsplatte 9 und der damit fest verbundenen aufgerauten Folie 18 andrückt.

Es kann somit die eingefärbte Folie 17 nicht durchscheinen.

Im aktivierten Zustand wird durch Herausziehen der Startlasche 11 der Freiraum 13 hergestellt, in den sich der Niederhaltebolzen 14 gegen die Unterseite des Abschlussdeckels 12 drückt, wenn die Wächterscheibe 3 umschnappt.

Es wird dadurch zugleich die mit Signalfarbe eingefärbte Folie 17 gegen die aufgeraute Folie 18 unter die Führungsplatte 9 gedrückt.

Es erscheint dadurch im Anzeigefeld 6 die irreversible, vorzugsweise ringförmige Farbtönung in der gewählten Farbe.

Es wird dadurch irreveribel das Erreichen der vorgegebenen Grenztemperatur angezeigt.

Die Anzeige der kritischen Temperatur erfolgt anstelle des Einsatzes einer Indikatormasse durch den technischen Effekt der Wirkung der Lichtbrechung einer eingefärbten Folie 17, die durch Druck der Wächterscheibe 3 gegen eine aufgerauhte Folie 18 sichtbar gemacht wird.

Der technische Effekt beruht also darauf, dass die aufgerauhte Folie 18 zwei physikalische Zustände hat. Dies ist der Zustand mit schräg gestellten Schuppen, der kein Licht durchlässt und der geänderte Anfangszustand mit durch Druck glatt angelegten Schuppen mit lichtdurchlässigkeit. Dieser Endzustand ist irreversibel durch den Druck der Wächterscheibe 3 auf die Folien im aktivierten Zustand.

Die Höhe der Anhebung des Niederhaltebolzens und/oder des Anzeigebolzens ergibt sich aus der Höhe der Wächterscheibe die durch den Niederhaltebolzen (14) fixiert ist. Nur wenn diese konstruktiven Parameter vorliegen, wird im kritischen Zustand die irreversible Farbtönung der eingefärbten Folie sichtbar.

Das Indikatorsystem dieser Variante der Erfindung ist konstruktiv einfacher und daher wirtschaftlicher als die Farbtönung mittels Indikatormasse und der dazu erforderlichen, konstruktiven Teile des Systems.

## Patentansprüche

1. Temperaturindikatorsystem, bestehend aus mindestens einem Farbindikator zur irreversiblen Anzeige des Erreichens mindestens eines unteren und/oder oberen Temperaturgrenzwertes aus einem Gehäuse (1) mit mindestens einer Ausnehmung (2), in der sich (jeweils) der Indikator mit folgenden Merkmalen befindet : auf der Bodenfläche der Ausnehmung (2) ist eine Wächterscheibe (3) aus Thermobimetall eingelegt ; auf deren im inaktivierten Zustand kalottenförmig nach unten gewölbter Oberfläche befindet sich an der tiefsten Stelle eine chemische Indikatormasse (4) ; über der indikatormasse (4) und auf dem oberen Rand der Wächterscheibe (3) liegt eine Sicherungsscheibe (15) auf, die die Scheibe (3) festhält und die eine mittige Durchbruchsöffnung besitzt ; darüber liegt waagerecht eine saugfähige Scheibe (16) mit mittiger Durchbruchsöffnung, die die Ausnehmung (2) im Gehäuse (1) abschliesst ; über dieser Scheibe (16) ist eine Führungsplatte (9) mit mittiger Öffnung zur Führung eines Niederhaltebolzens (14) angeordnet ; über dieser Platte (9) ist ein in das Gehäuse (1) eingedrückter, durchsichtiger Abschlussdeckel (12) mit einer Ausnehmung (13) für eine Startlasche (11) angeordnet ; der Niederhaltebolzen (14) erstreckt sich von der Masse (4) durch Öffnungen der Sicherungsscheibe (15) ; der saugfähigen Scheibe (16), und der Führungsplatte (9) bis zur Startlasche (11) ; ein vorzugsweise selbstklebendes Abschlussetikett (5) mit mittigem Endanzeigefeld (6) ist über dem Deckel (12) angeordnet ; jeder Indikator ist so ausgebildet, daß nach dem Herausziehen der Startlasche (11) und im aktivierten Zustand die Wächterscheibe (3) kalottenförmig nach oben gewölbt ist und dadurch die Indikatormasse (4) durch die Durchbruchsöffnung in die saugfähige Scheibe (16) eingepresst ist, diese dadurch eingefärbt ist, und diese Einfärbung durch das mittige Anzeigefeld (6) des Abschlussetikettes (5) irreversibel sichtbar ist.

2. Temperaturindikatorsystem, bestehend aus mindestens einem Farbindikator zur irreversiblen Anzeige des Erreichens mindestens eines unteren und/oder oberen Temperaturgrenzwertes aus einem Gehäuse (1) mit mindestens einer Ausnehmung (2), in der sich (jeweils) der Indikator mit folgenden Merkmalen befindet : auf der Bodenfläche der Ausnehmung (2) ist eine Wächterscheibe (3) aus Thermobimetall eingelegt, die im inaktivierten Zustand kalottenförmig nach unten gewölbt ist ; ein mit Signalfarbe eingefärbter, vertikal angeordneter Anzeigebolzen (8), der an seinen beiden Enden zu seiner Achse senkrechte Flächen aufweist, steht mit seiner unteren Fläche direkt auf die nach unten gewölbte Wächterscheibe (3) auf eine Führungsplatte (9) mit mittigen Öffnung zur führung des Bolzens (8) ist direkt über der Wächterscheibe (3) angeordnet ; ein Abschlußdeckel (12) mit einer Ausnehmung (13) für eine Startlasche (11) ist in das Gehäuse (1) eingedrückt ; über dem Bolzen und unter der Startlasche (11) ist eine Klappeinlage (10) angeordnet ; auf dem Deckel ist ein Abschlußetikett (5) mit Anzeigefeld (6) befestigt ; jeder Indikator ist so ausgebildet, daß nach dem Herausziehen der Startlasche und im aktivierten Zustand die Wächterscheibe (3) nach oben gewölbt ist und der Bolzen (8) durch die Führungsöffnung der Führungsplatte (9) nach oben gedrückt ist, dadurch die Klappeinlage (10) nach oben geöffnet ist, und daß der Anzeigebolzen (8) durch die Ausnehmung (13) im Deckel (12) und durch das Anzeigefeld (6) des Abschlussetiketts (5) irreversibel sichtbar ist.

3. Temperaturindikatorsystem, bestehend aus mindestens einem Farbindikator zur irreversiblen Anzeige des Erreichens mindestens eines unteren und/oder oberen Temperaturgrenzwertes aus einem Gehäuse (1) mit mindestens einer Ausnehmung (2), in der sich (jeweils) der Indikator mit folgenden Merkmalen befindet : auf der Bodenfläche der Ausnehmung ist eine Wächterscheibe (3) aus Thermobimetall eingelegt ; die Wächterscheibe (3) ist im inaktivierten Zustand kalottenförmig nach unten gewölbt und deren Oberfläche ist mit einer gefärbten Folie (17) versehen ; darüber befindet sich eine auf dem oberen Rand der Wächterscheibe (3) aufliegende, durchsichtige Führungsplatte (9) mit einer mittigen Durchbruchsöffnung, welche diese Schiebe (3) festhält ; die Unterseite der durchsichtigen Führungsplatte (9) ist mit einer Folie (18) versehen, deren schuppenförmige Aufrauhung eine derartige Richtung aufweist, daß diese undurchsichtig ist, und die mit einer mittigen Durchbruchöffnung versehen ist ; über der Führungsplatte (9) befindet sich ein in das Gehäuse (1) eingedrückter, durchsichtiger Abschlussdeckel (12), mit einer Ausnehmung (13) für eine Startlasche (11) ; ein Niederhaltebolzen (14) erstreckt sich von der gefärbten Folie (17) durch die genannten Durchbruchöffnungen bis zur Startlasche (11) ; jeder Indikator ist so ausgebildet, daß nach dem Herausziehen der Startlasche und im aktivierten Zustand die Wächterscheibe (3) kalottenförmig nach oben gewölbt ist, dadurch die gefärbte Folie (17) auf der Oberfläche der Wächterscheibe (3) gegen die aufgerauhte Folie (18) an die Führungsplatte (9) gedrückt ist, die Schuppen der aufgerauhten Folie (18) sich flach legen, und dadurch die Lichtbrechung der Folie (18) so verändert wird, dass die Signalfarbe der gefärbten Folie (17) durch das mittige Anzeigefeld (6) des Abschlussdeckels (12) irreversibel und als farbiger Ring sichtbar ist.

4. Indikatorsystem nach Anspruch 1, dadurch gekennzeichnet, dass die chemische Indikatormasse aus Fettstoffen, wie aus einem Gemisch aus Fettsäureglycerinester mit Paraffinen, aus Gelbildnern, wie anorganische Absorbentien, aus einem Fliessmedium und aus einer für fettstoffe undurchdringlichen Hülle besteht.

5. Indikatorsystem nach Anspruch 1, dadurch gekennzeichnet, dass die Sicherungsscheibe (15) aus Kunststoff und die saugfähige Scheibe (16) aus weissem oder Filterpapier und die führungsplatte (9) aus durchsichtigem Kunststoff und der Abschlussdeckel (12) aus durchsichtigem Kunststoff und die startlasche (11) aus starrem Kunststoff und das Abschlussetikett (5) aus Papier oder Kunststoff bestehen.

6. Indikatorsystem nach Anspruch 1, dadurch gekennzeichnet, dass die chemische Indikatormasse (4) die Eigenschaft einer nicht-Newtonschen Flüssigkeit aufweist, deren FestFlüssig-Phase durch Gelbildung eingestellt ist.

7. Indikatorsystem nach Anspruch 1, dadurch gekennzeichnet, dass die chemische Indikatormasse (4) folgende Zusammensetzung in Gew.-% aufweist :

| | |
|---|---|
| Hartparaffin, | |
| Erstarrungspunkt 50-62°C : | 50-70, |
| vorzugsweise : | 55-65, |
| Triglyceride der Kokosnuss | |
| fettsäure, $C_8$-$C_{10}$, | |
| Dichte, g/20°C 0,948-0,923 : | 25-35 |
| synthetische Kieselsäure | |
| ($SiO_2$), | |
| Teilchengrösse 10-40 nm, | |
| Schüftgewicht 50-70 g/l, | |
| spezifische | |
| Oberfläche 50-380 $m^2/g$ : | 10-20, |
| Paraffin-lösliche | |
| Azo oder Antrachinon | |
| Farbstoffe | 1-2 |

8. Indikatorsystem nach einem der Ansprüche 1 bis 3, dadurch gekennzeichnet, daß das Gehäuse (1) aus schlag- und bruchfestem Kunststoff oder aus anderem, starren Material besteht, und dieses eine Schachtelform mit einer quadratischen oder rechteckigen Grundfläche aufweist mit auf der Oberfläche mittig angeordneten Anzeigefeldern.

9. Indikatorsystem nach einem der Ansprüche 1 bis 3, dadurch gekennzeichnet, daß das Gehäuse (1) folgende maximale Dimensionen aufweist :

| | |
|---|---|
| Länge | 40 mm, |
| Breite | 20 mm, |
| Höhe | 6 mm ; |
| Anzeigefeld | 3 bis 6 mm. |

10. Indikatorsystem nach einem der Ansprüche 1 bis 3, dadurch gekennzeichnet, dass das Gehäuse (1) auf seiner Unterseite selbstklebend ausgerüstet ist oder auf dieser Kunststoffspitzen mit Widerhaken aufweist zum Anbringen auf Verpackungen.

11. Indikatorsystem nach Anspruch 3, dadurch gekennzeichnet, dass die Shuppen der aufgerauhten Folie (18) eine Länge bis maximal 50 μm und im zusammengedrückten Zustand von 1-3 μm aufweisen.

12. Indikatorsystem nach Anspruch 3, dadurch gekennzeichnet, dass die gefärbte Folie (17) aus Kunststoff wie Polyester besteht, selbstklebend ausgebildet ist und auf die Wächterscheibe (3) aufgeklebt ist.

13. Indikatorsystem nach Anspruch 3, dadurch gekennzeichnet, das die aufgerauhte Folie (18) selbstklebend ausgebildet ist und gegen die Unterseite der Führungsplatte (9) aufgeklebt ist.

14. Indikatorsystem nach Anspruch 3, dadurch gekennzeichnet, dass die Folie (17) mit leuchtender Signalfarbe eingefärbt ist.

15. Indikatorsystem nach Anspruch 3, dadurch gekennzeichnet, dass die eingefärbte Folie (17) eine Dicke von 12-30 μm und einen Durchmesser von 10-15 mm aufweist.

16. Verfahren zur Herstellung eines Indikatorsystems nach Anspruch 1, bei dem in jede der mindestens einen Ausnehmung (2) des Gehäuses (1) jeweils eine auf definierte Temperatur eingestellte Wächterscheibe aus Thermobimetall mit ihrer in inaktivierten Zustand kalottenförmig nach unten gewölbten Oberfläche eingelegt wird, die an ihrer tiefsten Stelle eine eingefärbte Indikatormasse trägt, wobei der Raum, den die Wächterscheibe ausfüllt, eine solche Höhe hat, dass diese nach dem Umschnappen in die umgekehrte Stellung durch Überschreiten eines kritischen unteren und/oder oberen Grenzwertes der Temperatur mit dem höchsten Punkt ihrer Oberfläche die Indikatormasse gegen die Öffnung einer Sicherungsscheibe drückt und dadurch die Indikatormasse in die darüber liegende vorzugsweise aus Filterpapier saugfähige Scheibe drückt und diese dabei einfärbt, bei dem auf die Indikatormasse auf der Wächterscheibe das untere Ende eines weissen oder farblosen zylindrischen Niederhaltebolzens durch eine Sicherungsscheibe und durch eine saugfähige Scheibe und durch eine Führungsplatte eingefügt wird mit einer solchen Länge, dass dieser im inaktivierten Zustand unterhalb eines eingedrückten Abschlussdeckels mit eingelegter Startlasche mit seiner oberen Fläche abschliesst, und dieser im aktivierten Zustand durch Überschreiten eines kritischen unteren und/oder oberen Grenzwertes der einwirkenden Temperatur durch das Umschnappen einer Wächterscheibe aus Thermobimetall durch den durch Herausziehen einer Startlasche entstandenen Freiraum bis unter den durchsichtigen Abschlussdeckel aufsteigt und dadurch die in die saugfähige Scheibe eingepresste Indikatormasse sichtbar ist und der Freiraum eine solche Höhe hat, dass die Länge des Niederhaltebolzens bis unter die Ausnehmung für die Startlasche im Abschlussdeckel aufsteigen kann, bei dem nach dem Einlegen der Sicherheitsscheibe und der saugfähigen Fläche in dem sich darüber befindlichen Freiraum ein durchsichtiger Abschlussdeckel auf der ganzen Fläche des Gehäuses durch Aufdrücken fest eingerastet wird, sodaß durch den kompakten Verbund der Teilschichten beim Transport und bei der Handhabung keine Verschiebung eintritt, und bei dem ein Etikett -ggfs. selbstklebend- mit einer Mitte derart befestigt wird, daß im inaktivierten Zustand die weisse Fläche der saugfähigen Scheibe durchscheint und nach dem Ziehen der Startlasche und bei Überschreiten der kritischen Temperaturgrenze die Einfärbung der saugfähigen Scheibe durchscheint.

17. Verfahren nach Anspruch 16, dadurch gekennzeichnet, dass die Startlasche nach dem Anbringen des Indikatorsystems auf Einzelverpackungen oder auf Verpackungsbehältern herausgezogen und dadurch das Kontrollsystem aktiviert wird, derart, dass beim Überschreiten des kritischen Grenzwertes der Temperatur der Umkehreffekt des Thermobimetalles der Wächterscheibe eintritt, der die Sichtbarmachung der Färbung bewirkt.

18. Verfahren nach Anspruch 16 oder 17, dadurch gekennzeichnet, dass die Wächterscheibe aus Thermobimetall auf einen unteren und/oder oberen Grenzwert der Kontrolltemperatur so empfindlich eingestellt ist, dass bei abfallender oder aufsteigender Temperatur der Umkehreffekt bei Wächterscheibe aus Thermobimetall auf einen unteren und/oder oberen Grenzwert der Kontrolltemperatur so empfindlich eingestellt ist, dass bei abfallender oder aufsteigender Temperatur der Umkehreffekt bei 1°C Unter- oder Überschreiten der Grenztemperatur eintritt und dadurch die Sichtbarmachung der Färbung eintritt.

19. Verfahren nach einem der Ansprüche 16 bis 18, dadurch gekennzeichnet, dass durch die Auswahl der Wächterscheiben aus Thermobimetall ein Kontrollbereich von −20°C bis +30°C überdeckt wird.

20. Anwendung des Indikatorsystems nach einem der Ansprüche 1 bis 15 auf chemische, pharmazeutische Stoffe und Produkte, und auf Vor- und Fertigprodukte aus Nahrungsmitteln bei der Lagerung, beim Transport und bei der Handhabung oder Verarbeitung.

21. Anwendung nach Anspruch 20, dadurch gekennzeichnet, dass zur Kontrolle frei zu bestimmender Grenzbereiche der Lager-, Transport-, Handhabungs- Temperatur verpackter oder umhällter Ware ein oder mehrere, oder kombinierte Indikatorsysteme eingesetzt werden.

22. Anwendung nach einem der Ansprüche 20 oder 21, dadurch gekennzeichnet, dass durch Einsatz eines gekoppelten Indikatorsystems das Unterschreiten und das Überschreiten der kritischen Grenztemperatur für die gleiche Ware angezeigt wird.

23. Anwendung nach einem der Ansprüche 20 bis 22, dadurch gekennzeichnet, dass durch Verbund des Indikatorsystems mit einem System zur Messung dei Zeitdauer die Dauer des Unter- und/oder Überschreiten des Grenzbereiches festgestelt wird.

## Claims

1. A temperature indication system consisting of at least one colour indicator for irreversibly indicating that at least one lower and/or upper temperature limit value has been reached,

of a housing (1) with at least one recess (2) in which in each case the indicator with the following features is located :

a monitoring disc (3) of thermobimetal is laid on the bottom surface of the recess (2) ;

on the surface of which disc, which surface in the inactivated state is curved downwards in a cup-shape, a chemical indicator substance (4) is located at the lowest point ;

a securing disc (15) lies over the indicator substance (4) and on the top edge of the monitoring disc (3), which securing disc secures the monitoring disc (3), which has a central through-opening ;

an absorbent disc (16) with a central through-opening which closes off the recess (2) in the housing (1) lies horizontally thereover ;

over this disc (16) there is disposed a guide plate (9) with a central opening for guiding a retaining pin (14);

over this plate (9) there is a transparent closing cover (12) pressed into the housing (1), which cover has a recess (13) for a start tab (11) ;

the retaining pin (14) extends from the substance (4) through openings in the securing disc (15) of the absorbent disc (16) and the guide plate (9) up to the start tab (11) ;

a preferably self-adhesive sealing sticker (5) with a central end indicator space (6) is arranged over the cover (12) ;

each indicator is designed so that after the pulling-out of the start tab (11) and in the activated state the monitoring disc (3) is curved upwards in a cup-shape and the indicator substance (4) is pressed thereby through the through-opening into the absorbent disc (16), said disc is coloured thereby, and this colouring is irreversibly visible through the central indicator space (6) of the sealing sticker (5).

2. A temperature indication system consisting of at least one colour indicator for irreversibly indicating that at least one lower and/or upper temperature limit value has been reached,

of a housing (1) with at least one [recess] in which (in each case) the indicator with the following features is located :

a monitoring disc (3) of thermobimetal which in the inactivated state is curved downwards in a cup-shape is laid on the recess (2) ;

a vertically arranged indicator pin (8) coloured with signal colour, which pin has surfaces perpendicular to its axis at both ends, stands with its lower surface directly on the downward-curved monitoring disc (3) ; a guide plate (9) having a central opening for guiding the pin (8) is located directly above the monitoring disc (3) ;

a closing cover (12) with a recess (13) for a start tab (11) is pressed into the housing (1) ;

a flap insert (10) is located over the pin (8) and beneath the start tab (11) ;

a sealing sticker (5) with indicator space (6) is attached to the cover ;

each indicator is designed so that after the pulling-out of the start tab and in the activated state the monitoring disc (3) is curved upwards and the pin (8) is pressed upwards through the guide opening of the guide plate (9), the flap insert (10) is opened at the top thereby, and that the indicator pin (8) is irreversibly visible through the recess (13) in the cover (12) and through the indicator space (6) of the sealing sticker (5).

3. A temperature indication system consisting of at least one colour indicator for irreversibly indicating that at least one lower and/or upper limit value has been reached,

of a housing (1) with at least one recess in which (in each case) the indicator with the following features is located :

a monitoring disc (3) of thermobimetal is laid on the bottom surface of the recess ;

the monitoring disc (3) in the inactivated state is curved downwards in a cup-shape and the surface thereof is provided with a coloured film (17) ;

thereover there is a transparent guide plate (9) with a central through-opening which secures said disc (3) and lies on the upper edge of the monitoring disc (3) ;

the bottom side of the transparent guide plate (9) is provided with a film (18), the flake-shaped roughening of which is in such a direction that it is opaque, and which is provided with a central through-opening ;

above the guide plate (9) there is a transparent closing cover (12), pressed into the housing (1), with a recess (13) for a start tab (11) ;

a retaining pin (14) extends from the coloured film (17) through the afore-mentioned through-openings to the start tab (11) ;

each indicator is designed so that after the pulling-out of the start tab and in the activated state the monitoring disc (3) is curved upwards in a cup-shape, the coloured film (17) on the surface of the monitoring disc (3) is thereby pressed against the roughened film (18) onto the guide plate (9), the flakes of the roughened film (18) lie flat, and thereby the refraction of light of the film (18) is altered so that the signal colour of the coloured film (17) is visible irreversibly and as a coloured ring through the central indicator space (6) of the closing lid (12).

4. An indication system according to Claim 1, characterised in that the chemical indicator substance consists of fatty substances, such as a mixture of fatty acid glycerol ester with paraffins, of gelling agents, such as inorganic absorbent agents, of a flow medium and of a sheathing which is impenetrable to fatty substances.

5. An indication system according to Claim 1, characterised in that the securing disc (15) is made of plastic and the absorbent disc (16) is made of white parer or filter paper and the guide plate (9) of transparent plastic and the closing cover (12) of transparent plastic and the start tab (11) of rigid plastic and the sealing sticker (5) of paper or plastic.

6. An indication system according to Claim 1, characterised in that the chemical indicator substance (4) has the property of a non-Newtonian fluid, the solid-liquid phase of which is set by gel formation.

7. An indication system according to Claim 5, characterised in that the chemical indicator substance (4) has the following composition in % by weight :

| hard paraffin, | |
|---|---|
| solidification point 50-62°C: | 50-70, |
| preferably: | 55-65, |
| triglycerides of coconut | |
| fatty acid, $C_8$-$C_{10}$, | |
| density, g/20°C 0.948-0.923: | 25-35, |
| synthetic silicic acid ($SiO_2$), | |
| particle size 10-40 nm, | |
| bulk density 50-70 g/l, | |
| specific surface area | |
| 50-380 $m^2$/g: | 10-20, |
| paraffin-soluble azo or | |
| anthraquinone dyes: | 1-2. |

8. An indication system according to one of Claims 1 to 3, characterised in that the housing (1) is made of shock-resistant and break-proof plastic or of another rigid material, and said housing has a box-shape with a square or rectangular base with indicator spaces arranged centrally on the surface.

9. An indication system according to one of Claims 1 to 3, characterised in that the housing (1) has the following maximum dimensions :

| length | 40 mm |
|---|---|
| breadth | 20 mm |
| height | 6 mm |
| indicator space | 3 to 6 mm. |

10. An indication system according to one of Claims 1 to 3, characterised in that the housing (1) is provided with self-adhesion means on its bottom side or has thereon plastic tips with barbs for attachment to packaging.

11. An indication system according to Claim 3, characterised in that the flakes of the roughened film (18) have a length up to a maximum of 50 μm and in the compressed state of 1-3 μm.

12. An indication system according to Claim 3, characterised in that the coloured film (17) is made of plastic such as polyester, is self-adhesive and is glued to the monitoring disc (3).

13. An indication system according to Claim 3, characterised in that the roughened film (18) is self-adhesive and is glued against the bottom side of the guile plate (9).

14. An indication system according to Claim 3, characterised in that the film (17) is coloured with a luminous signal colour.

15. An indication system according to Claim 3, characterised in that the coloured film (17) has a thickness of 12-30 μm and a diameter of 12-15 mm.

16. A method for producing an indication system according to Claim 1, in which in each case one monitoring disc of thermobimetal set to a defined temperature is inserted into each one of the at least one recess (2) of the housing (1) with its surface which in the inactivated state curved downwards in a cup-shape, which disc at its lowermost point bears a coloured indicator substance, the space taken up by the monitoring disc having such a height that after snapping into the reversed position by exceeding a critical lower and/or upper temperature limit value it presses the indicator substance against the opening of a securing disc with the highest point of its surface and thereby presses the indicator substance into the absorbent disc located thereover, which is preferably made of filter paper, and thereby superficially colours it, in which the lower end of a white or colourless cylindrical retaining pin is inserted onto the indicator substance on the monitoring disc through a securing disc and through an absorbent disc and through a guide plate, to such a length that said pin in the inactivated state closes with its upper surface [sic] below a pressed-in closing cover with an inserted start tab, and said pin in ;he activated state by exceeding a critical lower and/or upper limit value of the acting temperature by the snapping of a monitoring disc of thermobimetal, rises through the free space formed by pulling out a start tab and up to

13

beneath the transparent closing cover and thereby the indicator substance pressed into the absorbent disc is visible and the free space has such a height that the length of the retaining pin can rise to below the recess for the start tab in the closing cover, in which after the insertion of the safety disc and the absorbent surface in the free space located thereover a transparent closing cover is securely engaged on the entire surface of the housing by pressing, so that due to the compact composite action of the partial layers no displacement occurs during transport and during handling, and in which then the sticker, optionally self-adhesively with a recess in its centre is attached in such a manner that in the inactivated state the white surface of the absorbent disc shows through and after the pulling of the start tab and when the critical temperature limit is exceeded the colouring of the absorbent disc shows through.

17. A method according to Claim 16, characterised in that the start tab is pulled out after attachment of the indication system to individual packagings or to packaging containers and the monitoring system is thereby activated, so that when the critical temperature limit value is exceeded the reversal effect of the thermobimetal of the monitoring disc occurs, which causes the colouring to be made visible.

18. A method according to Claims 16 or 17, characterised in that the monitoring disc of thermobimetal is set to a lower and/or upper limit value of the monitoring temperature so sensitively that if the temperature drops or rises the reversal effect occurs when the temperature rises above or drops below the limit temperature by 1°C and the colouring is thereby made visible.

19. A method according to one of Claims 16 to 18, characterised in that the selection of the monitoring discs of thermobimetal permits a monitoring range of −20°C to +30°C to be covered.

20. Application of the indication system according to one of Claims 1 to 15 to chemical and pharmaceutical substances and products, and to fabricated materials and finished products consisting of foodstuffs during storage, during transportation and during handling or processing.

21. Application according to Claim 20, characterised in that one or more or combined indicators are used for monitoring limit ranges of the storage, transportation or handling temperature of packed or wrapped goods which can be freely determined.

22. Application according to one of Claims 20 or 21, characterised in that the fact that the temperature drops below or exceeds the critical limit temperature for the same goods is indicated by the use of a coupled indication system.

23. Application according to one of Claims 20 to 22, characterised in that the duration of the period during which the temperature remains below or above the limit range is established by combining the indication system with a system for measuring duration.

## Revendications

1. Système indicateur de température comprenant au moins un indicateur coloré destiné à indiquer de manière irréversible qu'au moins une valeur limité de température inférieure et/ou supérieure a été atteinte, un boîtier (1) pourvu d'au moins un évidement (2) dans lequel se trouve respectivement l'indicateur, ce dernier étant caractérisé en ce qu'un plateau de contrôle (3) en bilame thermique est mis en place sur la surface de fond de l'évidement (2) ; en ce qu'une masse d'indicateur chimique (4) se trouve à l'endroit le plus profond sur la surface dudit plateau qui est voûtée vers le bas en forme de dôme à l'état inactivé ; en ce qu'au-dessus de la masse d'indicateur (4) et sur le bord supérieur du plateau de contrôle (3) se trouve une plaque de protection (15), qui maintient le plateau de contrôle (3) et qui possède une ouverture de communication centrale ; en ce que au-dessus de celle-ci se trouve horizontalement une plaque absorbante (16) présentant une ouverture de communication centrale, ladite plaque absorbante fermant l'évidement (2) dans le boîtier (1) ; en ce qu'au-dessus de cette plaque (16) est agencée une plaque de guidage (9) présentant une ouverture centrale destinée au guidage d'une cheville de maintien à niveau bas (14) ; en ce qu'au-dessus de cette plaque (9) est agencé un couvercle de fermeture transparent (12) pourvu d'un évidement (13) destiné à une languette d'amorçage (11) ledit couvercle étant pressé dans le boîtier (1) ; en ce que la cheville de maintien a niveau bas (14) s'étend depuis la masse (4) à travers des ouvertures de la plaque de protection (15), de la plaque absorbante (16) et de la plaque de guidage (9) jusqu'à la languette d'amorçage (11) ; en ce qu'une étiquette de fermeture de préférence autocollante présentant un champ d'indication d'extrémité central (6) est agencée au-dessus du couvercle (12) ; en ce que chaque indicateur est réalisé de manière à ce qu'après le retrait de la languette d'amorçage (11) et à l'état activé, le plateau de contrôle (3) soit voûté vers le haut en forme de dôme et en ce que ainsi la masse d'indicateur (4) est pressée dans la plaque absorbante (16) à travers l'ouverture de communication, que celle-ci est de ce fait colorée et que cette coloration est visible de manière irréversible à travers la zone d'indication centrale (6) de l'étiquette de fermeture (5).

2. Système indicateur de température comprenant au moins un indicateur coloré destiné à indiquer de manière irréversible qu'au moins une valeur limite de température inférieure et/ou supérieure a été atteinte, un boîtier (1) pourvu d'au moins un évidement dans lequel se trouve (respectivement) l'indicateur, qui est caractérisé en ce que sur l'évidement (2) est placé un plateau de contrôle (3) en bilame thermique, qui à l'état inactivé est voûté vers le bas en forme de dôme ; en ce qu'une cheville d'indication (8), qui est colorée avec de la couleur de signalisation, qui est agencée verticalement et qui présente à ses deux extrémités des surfaces perpendiculaires à son axe, repose par sa surface inférieure directement sur le plateau de contrôle (3) qui est voûté vers le bas ; en ce qu'une plaque de guidage (9) présentant une ouverture centrale destinée au guidage de la cheville (8) est agencée directement au-dessus de plateau de contrôle (3) ; en ce qu'un couvercle de fermeture (12) présentant un évidement (13) destiné à une languette d'amorçage (11) est pressé dans le boîtier (1) ; en ce qu'une garniture à rabattement (10) est agencée au-dessus de la cheville (8) et en dessous de la languette d'amorçage (11) ; en ce qu'une étiquette de fermeture (5) présentant une zone d'indication (6) est fixée au couvercle ; en ce que chaque indicateur est réalisé de manière à ce qu'après le retrait de la languette d'amorçage et à l'état activé, le plateau de contrôle (3) soit voûté vers le haut et à ce que la cheville (8) soit pressée vers le haut à travers l'ouverture de guidage de la plaque de guidage (9), que de ce fait la garniture à rabattement (10) soit ouverte vers le haut et que la cheville d'indication (8) soit visible de manière irréversible à travers l'évidement (3) dans le couvercle (12) et par la zone d'indication (6) de l'étiquette de fermeture (5).

3. Système indicateur de température comprenant au moins un indicateur coloré destiné à indiquer de manière irréversible qu'au moins une valeur limite inférieure et/ou supérieure a été atteinte, un boîtier (1) présentant au moins un évidement dans lequel se trouve (respectivement) l'indicateur, qui est caractérisé en ce qu'un plateau de contrôle (3) en bilame thermique est placé sur la surface de fond de l'évidement ; en ce que le plateau de contrôle (3) est, à l'état inactivé voûté vers le bas en forme de dôme et en ce que la surface de celui-ci est pourvue d'une feuille colorée (17) ; en ce qu'au-dessus de celui-ci se trouve une plaque de guidage transparente (9), qui repose sur le bord supérieur du plateau de contrôle (3), qui présente une ouverture de communication centrale et qui maintient ce plateau (3) ; en ce que le côté inférieur de la plaque de guidage transparente (9) est pourvu d'une feuille (18) dont la rugosité en forme d'écaillures présente une orientation telle que cette feuille est opaque, celle-ci étant pourvue d'une ouverture de communication centrale ; en ce qu'au dessus de la plaque de guidage (9) se trouve un couvercle de fermeture transparent (12), qui est pressé dans le boîtier (1) et qui est pourvu d'un évidement (13) destiné à une languette d'amorçage (11) ; en ce qu'une cheville de maintien à niveau bas (14) s'étend depuis la feuille colorée (17) à travers lesdites ouvertures de communication jusqu'à la languette d'amorçage (11) ; en ce que chaque indicateur est réalisé de manière à ce qu'après le retrait de la languette d'amorçage et à l'état activé, le plateau de contrôle (3) soit voûté vers le haut en forme de dôme, qu'ainsi la feuille colorée (17) sur la surface du plateau de contrôle (3) est pressée contre la feuille rugueuse (18) sur la plaque de guidage (9), que les écaillures de la feuille rugueuse (18) se mettent à plat et qu'ainsi la réfraction de la lumière par la feuille (18) est modifiée de manière à ce que la couleur de signalisation de la feuille colorée (17) soit visible de manière irréversible et sous la forme d'un anneau coloré à travers la zone d'indication centrale (6) du couvercle de fermeture (12).

4. Système indicateur suivant la revendication 1, caractérisé en ce que la masse d'indicateur chimique comprend des matières grasses, ainsi qu'un mélange d'esters glycériques d'acides gras avec des paraffines, des agents formateurs de gel, tels que des agents absorbants inorganiques, un milieu dissolvant et une enveloppe impénétrable pour les matières grasses.

5. Système indicateur suivant la revendication 1, caractérisé en ce que la plaque de protection (15) est constituée de matière synthétique, la plaque absorbante (16) de papier filtre ou de papier blanc, la plaque de guidage (9) de matière synthétique transparente, le couvercle de fermeture (12) de matière synthétique transparente, la languette d'amorçage (11) de matière synthétique rigide et l'étiquette de fermeture (5) de papier ou de matière synthétique.

6. Système indicateur suivant la revendication 1, caractérisé en ce que la masse d'indicateur chimique (4) présente la propriété d'un liquide non newtonien, dont la phase solide-liquide est établie par la formation de gel.

7. Système indicateur suivant la revendication 5, caractérisé en ce que la masse d'indicateur chimique (4) présente la composition en pourcentage en poids suivante :
Paraffine dure,
Point de solidification : de 50 à 62°C : 50 à 70, de préférence : 55 à 65
Triglycéride d'acide gras de noix de coco, $C_8$-$C_{10}$,
Densité, en g/20°C g/20°C 0,948-0,923 : 25 à 35,
Acide silicique synthétique ($SiO_2$),
Grosseur des particules : 10 à 40 nm,
Densité en vrac : 50 à 70 g/l,
Surface spécifique : 50 à 380 m²/g ; 10 à 20,

Colorants azoïques ou antraquinoniques solubles dans la paraffine : 1 à 2.

8. Système indicateur suivant l'une des revendications 1 à 3, caractérisé en ce que le boîtier (1) est constitué d'une matière synthétique résistant aux chocs et à la rupture ou d'une autre matière rigide et en ce que ledit boîtier présente une forme de boîte avec une surface de base carrée ou rectangulaire et à la surface supérieure de laquelle des zones d'indication sont agencées de manière centrale.

9. Système indicateur suivant l'une des revendications 1 à 3, caractérisé en ce que le boîtier (1) présente les dimensions maximales suivantes :

```
Longueur                    40 mm
Largeur                     20 mm
Hauteur                      6 mm
Zone  d'indication           3 à 6 mm.
```

10. Système indicateur suivant l'une des revendications 1 à 3, caractérisé en ce que le boîtier (1) est apprêté de manière autocollante sur sa face inférieure ou que celui-ci présente sur ladite face des pointes de matière synthétique en barbelé pour la disposition sur des emballages.

11. Système indicateur suivant la revendication 3, caractérisé en ce que les écaillures de la feuille rugueuse (18) présentent une longueur allant jusqu'à maximum 50 μm et à l'état comprimé de 1 à 3 μm.

12. Système indicateur suivant la revendication 3, caractérisé en ce que la feuille colorée (17) est constituée d'une matière synthétique, telle que du polyester, en ce que celle-ci est réalisée de manière autocollante et en ce qu'elle est collée sur le plateau de contrôle (3).

13. Système indicateur suivant la revendication 3, caractérisé en ce que la feuille rugueuse (18) est réalisée de manière autocollante et en ce que celle-ci est collée contre la face inférieure de la plaque de guidage (9).

14. Système indicateur suivant la revendication 3, caractérisé en ce que la feuille (17) est colorée avec une couleur de signalisation luminescente.

15. Système indicateur suivant la revendication 3, caractérisé en ce que la feuille colorée (17) présente une épaisseur comprise entre 12 et 30 μm et un diamètre compris entre 12 et 15 mm.

16. Procédé de fabrication d'un système indicateur suivant la revendication 1 conformément auquel il est inséré dans chacun d'au moins l'un des évidements (2) du boîtier (1) respectivement un plateau de contrôle en bilame thermique, qui est réglé à une température déterminée, la surface de celui-ci étant voûtée vers le bas en forme de dôme à l'état inactivé, ledit plateau de contrôle portant une masse d'indicateur coloré à hauteur de l'emplacement le plus profond de celui-ci, l'espace que remplit le plateau de contrôle présentant une hauteur telle que celui-ci presse, après le passage à la position basculée par le dépassement d'une valeur limite critique inférieure et/ou supérieure de la température, avec le point le plus élevé de sa surface supérieure, la masse d'indicateurs contre l'ouverture d'une plaque de protection et que ledit plateau presse ainsi la masse d'indicateurs dans la plaque absorbante, qui est située au-dessus de celui-ci et qui est constituée de préférence en papier filtre, la colorant ainsi, conformément auquel l'extrémité inférieure d'une cheville de maintien à niveau bas cylindrique blanche ou incolore est introduite à travers une plaque de protection, à travers une plaque absorbante et à travers une plaque de guidage sur la masse d'indicateurs située sur le plateau de contrôle, et ce sur une longueur telle que ladite cheville ferme, à l'état inactivé, en dessous d'un couvercle de fermeture enfoncé, avec la languette d'amorçage introduite, par sa surface supérieure et que ladite cheville monte, à l'état activé, par le dépassement d'une valeur limite critique inférieure et/ou supérieure de la température effective et par le basculement d'un plateau de contrôle en bilame thermique, à travers l'espace libre formé par le retrait d'une languette d'amorçage et ce jusqu'en dessous du couvercle de fermeture transparent, et qu'ainsi la masse d'indicateurs enfoncée dans la plaque absorbante soit visible et que l'espace libre présente une hauteur telle que la longueur de la cheville de maintien à niveau bas puisse monter jusqu'en dessous de l'évidement destiné à la languette d'amorçage dans le couvercle de fermeture, conformément auquel après l'introduction de la plaque de protection et de la polaque absorbante, un couvercle de fermeture transparent est verrouillé solidement par pression dans l'espace libre se trouvant au-dessus desdites plaques de protection et absorbantes sur toute la surface du boîtier, de manière à ce qu'il n'y ait pas de déplacement au cours lu transport et de la manipulation grâce à la liaison compacte des couches intermédiaires est conformément auquel une étiquette, éventuellement autocollante, présentant un évidement en son centre est ensuite fixée de manière telle qu'à l'état inactivé la surface blanche de a plaque absorbante transparaisse et qu'après le retrait de la languette d'amorçage et lors du dépassement de la limite de température critique, la coloration de la plaque absorbante transparaisse.

17. Procédé suivant la revendication 16, caractérisé en ce que la languette d'amorçage est sortie après l'agencement du système indicateur sur des emballages séparés ou sur des récipients d'emballage et qu'ainsi le système de contrôle est activé de manière à ce que lors du dépassement de la valeur limite critique de la température, l'effet de basculement du bilame thermique du plateau de contrôle se produise, ledit effet de basculement ayant pour effet la visualisation de la coloration.

18. Procédé suivant les revendications 16 ou 17, caractérisé en ce que le plateau de contrôle en bilame thermique est réglé avec une sensibilité telle à une valeur limite inférieure et/ou supérieure de la température de contrôle, qu'en cas de chute ou de hausse de la température, l'effet de basculement a lieu pour le dépassement par le bas ou par le haut de la température limite d'1°C, la visualisation de la coloration se produisant de ce fait.

19. Procédé suivant l'une des revendications 16 à 18, caractérisé en ce que par la sélection des plateaux de contrôle en bilame thermique, un domaine de contrôle allant de –20°C jusqu'à +30°C est couvert.

20. Application du système indicateur suivant l'une des revendications 1 à 15, à des matières et à des produits chimiques et pharmaceutiques et à des matières premières et des produits finis de produits alimentaires lors du stockage, lors du transport et lors de la manipulation et du traitement.

21. Application suivant la revendication 20, caractérisée en ce qu'un ou plusieurs indicateurs ou une combinaison de ceux-ci est utilisée pour le contrôle de domaines limites à déterminer librement des températures de stockage, de transport et de manipulation de produits emballés ou enveloppés.

22. Application suivant l'une des revendications 20 ou 21, caractérisée en ce que par l'utilisation d'un système indicateur couplé, le dépassement par le bas et par le haut de la température limite critique pour les mêmes produits est indiqué.

23. Application suivant l'une des revendications 20 à 22, caractérisée en ce que par la liaison du système indicateur à un système de mesure de la durée, la durée du dépassement par le bas et/ou par le haut du domaine limite est constatée.

Fig. 1

Fig. 2

Fig. 3

## Fig. 4

## Fig. 5

## Fig. 6

# Fig. 7

# Fig. 8

# Fig. 9

Fig. 10

Fig. 11

Fig. 12

Fig. 13

Fig. 14

Fig. 15

Fig. 16

Fig. 17

Fig. 18

10

8

10

8

# Fig. 19

# Fig. 20

# Fig. 21